Europäisches Patentamt

European Patent Office

Office européen des brevets

(19)

(11) Veröffentlichungsnummer: **0 175 316**
**A2**

(12) **EUROPÄISCHE PATENTANMELDUNG**

(21) Anmeldenummer: **85111664.0**

(22) Anmeldetag: **14.09.85**

(51) Int. Cl.⁴: **C 08 F 210/02**

(30) Priorität: **19.09.84 DE 3434316**

(43) Veröffentlichungstag der Anmeldung: **26.03.86**
Patentblatt 86/13

(84) Benannte Vertragsstaaten: **AT BE DE FR GB NL**

(71) Anmelder: **BASF Aktiengesellschaft,**
**Carl-Bosch-Strasse 38, D-6700 Ludwigshafen (DE)**

(72) Erfinder: **Metzger, Werner, Dr., Bergstrasse 12,**
**D-6717 Hessheim (DE)**
Erfinder: **Brandstetter, Franz, Dr., Ritterbueschel 45,**
**D-6730 Neustadt (DE)**
Erfinder: **Zentgraf, Ernst, Tilsiter Strasse 65,**
**D-6703 Limburgerhof (DE)**

(54) Verfahren zur Herstellung von Ethylencopolymerisaten.

(57) Die Erfindung betrifft ein Verfahren zur Herstellung von Copolymerisaten des Ethylens durch Copolymerisation von Ethylen mit anderen mit Ethylen copolymerisierbaren Comonomeren in einem Polymerisationssystem bei hohen Drücken und Temperaturen in Gegenwart von radikalisch zerfallenden Polymerisationsinitiatoren und Reglern, indem man Comonomere getrennt vom Ethylengemisch direkt dem Polymerisationssystem zudosiert.

EP 0 175 316 A2

Verfahren zur Herstellung von Ethylencopolymerisaten

Die Erfindung betrifft ein Verfahren zur Herstellung von Copolymerisaten des Ethylens durch Copolymerisation von Ethylen mit anderen mit Ethylen copolymerisierbaren Comonomeren in einem Polymerisationssystem bei Drücken von 500 bis 5.000 bar und Temperaturen von 50 bis 450°C in Gegenwart von radikalisch zerfallenden Polymerisationsinitiatoren, indem man dem Polymerisationssystem ein Gemisch aus Ethylen, Regler, gegebenenfalls Initiator und gegebenenfalls Comonomer zuführt.

Bei derartigen Verfahren der radikalischen Hochdruckpolymerisation entstehen üblicherweise hochmolekulare Ethylencopolymerisate mit Comonomergehalten von 0,5 bis 30 Gew.%.

Verfahren zur Herstellung von Ethylencopolymerisaten durch Copolymerisation von Ethylen in Rohrreaktoren oder Rührautoklaven als Polymerisationssysteme in Gegenwart von Polymerisationsinitiatoren, Reglern und Comonomeren, wobei ein Gemisch dieser Reaktanden Drücken oberhalb von 500 bar und Temperaturen von 50 bis 450°C ausgesetzt wird, sind bekannt (vgl. Ullmanns Encyclopädie der technischen Chemie, 4. Auflage, Band 19, Seiten 167 bis 175, 1980, Verlag Chemie GmbH, D-6940 Weinheim und die US-Patente 3 117 953 sowie 4 217 431). Des weiteren ist bekannt, eine Mischung aus Ethylen und Comonomeren an verschiedenen Stellen dem Polymerisationssystem zuzuführen (vgl. z.B. GB-Patent 10 96 945). Aus der EP-A1-96 221 ist auch bereits ein Verfahren zur Herstellung von Ethylen-Acrylsäureester-Copolymerisaten in einem rohrförmigen Polymerisationssystem bei hohen Temperaturen und Drücken bekannt, bei dem man dem Polymerisationssystem aus dessen Einlaßstelle und gleichzeitig an einer zweiten Stelle hinter der Einlaßstelle ein Gemisch aus Ethylen, Initiator und Regler zuführt, wobei die zur Copolymerisation benötigte Menge an Acrylsäureester zusammen mit Ethylen ausschließlich an der zweiten Zuführstelle zudosiert wird.

Bei dem bekannten Verfahren wird das Ethylen in Gegenwart der Comonomeren in Gasverdichtungsanlagen aufkomprimiert, bevor es in das Polymerisationssystem gelangt. Dies führt, vor allem bei hohen Comonomergehalten, zu Problemen in den Ethylenverdichtern. Zum anderen ist man in der Wahl der Dosierstellen eingeschränkt und auch hinsichtlich der herzustellenden Produkteigenschaften unflexibel.

Aufgabe der vorliegenden Erfindung war es, ohne großen technischen Aufwand ein flexibles Hochdruckpolymerisationsverfahren zur Herstellung von Ethylencopolymerisaten, aufzuzeigen.

Fre/P

Diese Aufgabe wird dadurch gelöst, daß die Comonomeren getrennt vom Ethylengemisch direkt dem Polymerisationssystem zudosiert werden. Nach bevorzugten Verfahren wird entweder die gesamte Menge oder es wird nur eine Teilmenge der Comonomeren getrennt vom Ethylengemisch zudosiert. Bevorzugt wird die vom Ethylengemisch getrennte Zudosierung von Comonomeren an mehreren Stellen des Polymerisationssystems vorgenommen. Die vom Ethylengemisch getrennte Zudosierung der Comonomeren erfolgt bevorzugt durch schnell laufende Hochdruckkolbenpumpen.

Unter Ethylencopolymerisaten werden die Copolymerisate des Ethylens verstanden, die bei den angegebenen Temperatur- und Druckverhältnissen herstellbar sind. Der Ausdruck Ethylencopolymerisate umfaßt Copolymerisate, die bis zu 60 Gew.%, bevorzugt 0,5 bis 40 Gew.% Comonomer einpolymerisiert enthalten und die einen Schmelzindex von 0,1 bis 150 g/10 min, bestimmt nach ASTM-D-1298-65 T bei einer Temperatur von 190°C und einem Auflagegewicht von 2,16 kg und eine Dichte von 0,900 bis 0,934 g/cm$^3$, gemessen nach DIN 53 479, aufweisen.

Als Comonomere kommen bei dem Verfahren alle mit Ethylen unter radikalischen Bedingungen copolymerisierbaren Verbindungen in Frage. Solche Comonomere sind z.B. Vinylester von $C_2$- bis $C_4$-Alkancarbonsäuren wie Vinylacetat; $C_2$- bis $C_4$-Alkylester von $C_3$- bis $C_4$-Alkencarbonsäuren wie Acrylsäure-n- oder -tert.-butylester; Ester monoethylenisch ungesättigter Dicarbonsäuren, insbesondere Mono- und Diester der Maleinsäure und Fumarsäure; monoethylenisch ungesättigte Carbonsäuren, insbesondere Acryl-, Methacryl-, Malein- und Fumarsäure; Amide monoethylenisch ungesättigter Carbonsäuren, insbesondere Acryl- und Methacrylsäureamid sowie N-Mono-und N,N-Dialkylamide der Acryl- und Methacrylsäure, monoethylenisch ungesättigte Alkohole, monoethylenisch ungesättigte Ketone, epoxidgruppenhaltige Monomere, zyklische Anhydride. Es können aber auch Comonomermischungen verwendet werden. Das erfindungsgemäße Verfahren bietet vor allem Vorteile, wenn das Verhältnis der Copolymerisationsparameter $r^1/r^2 < 1$ ist, wobei $r^1$ für Ethylen und $r^2$ für das Comonomere steht [vgl. P. Ehrlich, G.A. Mortimer, Advances Polymer Science, $\underline{7}$, (1970), Seiten 386 bis 448].

Bevor das Gemisch aus Ethylen und Comonomer in die Polymerisationszone gelangt, wird es in einem Vorverdichter auf 250 bis 350 bar komprimiert und anschließend in einem Nachverdichter auf Polymerisationsdruck gebracht.

Die Polymerisation des Ethylens in Gegenwart von anderen mit Ethylen copolymerisierbaren Verbindungen erfolgt bei Drücken von 500 bis 5000 bar, vorzugsweise 1500 bis 3000 bar. Die Temperaturen im Polymerisationssystem liegen zwischen 50 und 450°C, vorzugsweise zwischen 150 und 350°C. Die Bedingungen im Polymerisationssystem lassen sich apparativ in sogenannten Rohrreaktoren oder Autoklavenreaktoren einstellen. Unter Rohrreaktoren versteht man rohrförmige Polymerisationsgefäße, deren Längenausdehnung das über 2000-fache, bevorzugt das 5000- bis 50.000-fache des Rohrdurchmesser beträgt. Wie üblich wird ein Teil der Polymerisationswärme durch Kühlung des Rohrreaktors von außen mit Wasser abgeführt. Die Polymerisation des Ethylens im Rohrreaktor wird kontinuierlich betrieben. Es kann aber auch mit anderen Reaktoren gearbeitet werden, z.B. mit Rührautoklaven. Rührautoklaven sind Druckgefäße mit einem Längen-/Durchmesserverhältnis von 2 bis 20, die zur guten Durchmischung des Reaktionsgemisches mit einem Rührer versehen sind. Es kann aber auch in einer Kombination eines Rohrreaktors mit einem Autoklaven gearbeitet werden.

Die Hochdruckpolymerisation des Ethylens mit ethylencopolymerisierbaren Verbindungen wird üblicherweise durch Zufuhr von radikalbildenden Substanzen initiiert. Diese Substanzen können alleine, in Mischung mit dem zu polymerisierenden Ethylen und gegebenenfalls Comonomer oder in Kombination mit Luftsauerstoff verwendet werden. Die Dosierung der radikalbildenden Substanzen erfolgt an der Einlaßstelle oder gegebenenfalls an weiteren Stellen hinter der Einlaßstelle entlang des Rohrreraktors in Strömungsrichtung des polymerisierenden Ethylens. Unter Einlaßstelle wird im allgemeinen der Anfang des rohrförmigen Reaktors verstanden. Im Falle des Autoklaven kann die Dosierung der radikalbildenden Substanzen direkt in die Monomerenströme oder direkt in das Reaktionssystem erfolgen.

Das Molekulargewicht des anfallenden Copolymerisats kann durch die üblichen Regler, z.B. Kohlenwasserstoffe wie Propan, Propen etc., Ketone wie Acetone, Ethylketon etc. oder Aldehyd wie Propionaldehyd auf den gewünschten Wert gebracht werden.

Als radikalisch zerfallende Initiatoren werden bevorzugt organische Peroxide und Hydroperoxide oder Gemische aus Peroxiden bzw. Hydroperoxiden oder organischen Peroxide und Hydroperoxide in Kombination mit Sauerstoff verwendet. Es kann aber auch Sauerstoff allein eingesetzt werden. In Frage kommen dabei alle gängigen bekannten Peroxide und Hydroperoxide. Die Konzentration des zudosierten Initiators liegt im allgemeinen zwischen 0,001 bis 50 Mol.ppm, bevorzugt 0,1 bis 20 Mol.ppm, bezogen auf die gesamte, dem Polymerisationssystem zugeführte Ethylenmenge. Als geeignetes Lösungsmittel für den Initiator werden zweckmäßig aliphatische Kohlenwasserstoffe wie Oktan oder Benzin verwendet. Es können gegebenenfalls auch andere inerte Lösungsmittel wie Chlorbenzol, Cyclohexan oder Methanol eingesetzt werden.

Im Anschluß an die Polymerisation wird das Reaktionsgemisch in eine Hochdruckprodukttrennzone geleitet, in der ein Druck zwischen 100 und 500 bar und eine Temperatur zwischen 150 und 250°C herrscht. In diesem Hochdruckproduktabscheider wird das im Reaktor erhaltene Ethylencopolymerisat von nicht polymerisierten Monomeren abgetrennt. Aus dem Hochdruckproduktabscheider wird das Copolymerisat in die Niederdruckprodukttrennzone, in der ein Druck von unter 10 bar herrscht, geführt. Vom Niederdruckproduktabscheider wird das erhaltene Copolymerisat in bekannter Weise in einen Austragsextruder geführt und konfektioniert (vgl. z.B. US-Patent 4 260 722).

Nach erfindungsgemäßen Verfahren werden Comonomere getrennt vom Ethylengemisch direkt dem Polymerisationssystem zudosiert. Handelt es sich unter den Reaktionsbedingungen hierbei um Festsubstanzen, so kann die Dosierung der Comonomeren in Lösung, vor allem in nichtpolymerisierbaren Lösungen erfolgen. Die Dosierung der Comonomeren in das Polymerisationssystem erfolgt durch Hochdruckkolbenpumpen, wie es beispielsweise in den Literaturstellen EP-A1-101875 und EP-A1-101876 beschrieben ist. Bevorzugt werden hierbei Pumpen mit schnell laufenden Triebwerken (Hubzahl größer als 60 $min^{-1}$) verwendet, um eine möglichst gleichmäßige Reaktion zu gewährleisten.

Nach bevorzugten Verfahren wird die gesamte Menge der Comonomeren getrennt vom Ethylengemisch dem Polymerisationssystem zudosiert. In diesem Falle enthält das der Einlaßstelle des Reaktors zugeführte Ethylen kein Comonomer. Das Comonomer wird vielmehr getrennt nach der Ethyleneinlaßstelle, bei Rohrreaktoren an einer in Strömungsrichtung hinter der Ethyleneinlaßstelle gelegenen Zuführstelle zudosiert. Statt einer Zuführstelle für das Comonomer können auch zwei oder mehr Zuführstellen vorhanden sein. Bevorzugt ist auch ein Copolymerisationsverfahren, bei dem eine Teilmenge des eingesetzten Comonomer getrennt vom Ethylengemisch zudosiert wird, während der andere Teil im Ethylengemisch vorhanden ist. Hierzu wird dem Polymerisationssystem an der Einlaßstelle ein Gemisch aus Ethylen, Regler, Comonomer und gegebenenfalls Initiator zugeführt und an anderen Stellen des Polymerisationssystems weitere Mengen Comonomer und gegebenenfalls getrennt davon Initiator.

Es ist ein Vorteil des erfindungsgemäßen Verfahrens, daß man hinsichtlich der herzustellenden Produktpalette eine hohe Flexibilität besitzt. So können beispielsweise Copolymerisate, bei gleichem Comonomergehalt mit unterschiedlichen Eigenschaften in ein und demselben Reaktor hergestellt werden.

Hinzu kommt noch, daß die Reaktoren nach den erfindungsgemäßen Verfahren konstanter und einfacher betrieben werden können.

Die Vorteile des erfindungsgemäßen Verfahrens werden an nachfolgenden Beispielen im Falle von Acrylsäure-n-butylester-Copolymerisaten des Ethylens erläutert.

Beispiele

Die Copolymerisation des Ethylens mit Acrylsäure-n-butylester wurde in allen Fällen in einem rohrförmigen Reaktor durchgeführt. Das Ethylen wurde in 2 separaten Gasströmen mit dem Mengenverhältnis 1:1 mit der jeweils angegebenen Sauerstoffmenge und der notwendigen Reglermenge versetzt und bis auf Reaktionsdruck aufkomprimiert. Von den Gassträngen wurde in allen Fällen der eine der Einlaßstelle des Reaktors zugeführt und der andere an einer 2. Gaszufuhrstelle etwa nach einem Drittel der gesamten Reaktorlänge, nachdem sich die Reaktion in dem ersten Reaktorteil mit einem Temperaturmaximum ausgebildet hatte und die Temperatur des Gemisches schon wieder am Abklingen war, dem Reaktor zugeführt. Durch diese Maßnahme bilden sich zwei Reaktionszonen im rohrförmigen Reaktor (Zweizonen-Reaktor).

Der Reaktor hat in beiden Reaktionszonen ein Längen-/Durchmesserverhältnis von etwa 10.000. Zur Abführung eines Teils der Reaktionswärme wurden die Rohrwände von außen mit Wasser gekühlt. Bei der Durchführung der in dem Beispiel angeführten Versuche wurden die zur Copolymerisation benötigten Mengen an Acrylsäureester direkt in den Reaktor mit Hilfe von Höchstdruckdosierpumpen eindosiert. Bei der Durchführung der Vergleichsbeispiele wurde der Acrylsäureester auf der Saugseite des Nachverdichters so zugegeben, daß er entweder ausschließlich zu der ersten oder zur zweiten Reaktionszone gelangte. Das anfallende Copolymerisat wurde in bekannter Weise in den, dem Reaktor nachgeschalteten Abscheidern von nicht umgesetzten Monomer abgetrennt und über einen Extruder ausgetragen.

Beispiele 1 bis 3

Dem oben beschriebenen Reaktor wurden jeweils 2300 Gew.-Teile pro Stunde Ethylen und je 7 Gew.-Teile pro Stunden Acrlysäure-n-butylester zugeführt.

Der Zugabeort des Comonomeren war in

Beispiel 1: Der Beginn der Reaktionszone 1
Beispiel 2: Die Mitte der Reaktionszone 1 (nach dem Temperaturmaximum)
Beispiel 3: Das letzte Drittel der zweiten Reaktionszone.

Als Polymerisationsinitiator wurde dem Ethylen 16 Mol ppm Sauerstoff, bezogen auf Ethylen, zugesetzt.

Durch die freiwerdende Reaktionswärme, die nicht über die Reaktorwand an das Kühlmittel abgegeben wurde, erreichte das Reaktionsgemisch im ersten Teil des Reaktors eine maximale Temperatur von 300°C und im zweiten Teil des Reaktors nach der zweiten Zufuhrstelle eine maximale Temperatur von 290°C.

Als Molekulargewichtsregler wurde Propylen zugesetzt. Die Reglermenge wurde so bemessen, daß sich ein Molekulargewicht entsprechend einem Schmelzindex von 0,4 g/10', gemessen nach DIN 53 735, einstellte.

Auf diese Weise wurden 495 Gew.-Teile eines Ethylen-Acrylsäure-n-butylester-Copolymerisats erhalten, dessen Comonomeranteil 1,6 Gew.% betrug. Die gewonnenen Copolymerisate hatten eine Dichte von

Beispiel 1: 0,9235 g/cm$^3$
Beispiel 2: 0,9241 g/cm$^3$
Beispiel 3: 0,9244 g/cm$^3$

gemessen nach DIN 53 479.

Vergleichsbeispiele

Dem vorher beschriebenen Reaktor wurde das Comonomer nicht direkt zudosiert, sondern in technisch bekannter Weise dem Ethylen vor dem Kompressor auf der Saugseite des Nachverdichters zugegeben.

Es wurden in die erste Reaktionszone zugeführt:

Vergleichsbeispiel 1:
1150 Gew.-Teile pro Stunde Ethylen und 7 Gew.-Teile pro Stunde Acrylsäure-n-butylester.

Vergleichsbeispiel 2:
1150 Gew.-Teile pro Stunde Ethylen sowie in die zweite Reaktionszone

Vergleichsbeispiel 1: 1150 Gew.-Teile pro Stunde Ethylen

Vergleichsbeispiel 2: 1150 Gew.-Teile pro Stunde Ethylen und 7 Gew.-Teile pro Stunde Acrylsäure-n-butylester.

Als Polymerisationsinitiator wurde dem Gemisch jeweils 16 Mol ppm Sauerstoff, bezogen auf das Ethylen, zugegeben.

Durch die freiwerdende Reaktionswärme, die nicht über die Reaktorwand an das Kühlmedium abgegeben wurde, erreichte das Reaktionsgemisch im ersten Teil des Reaktors eine maximale Temperatur von 300°C und im zweiten Teil des Reaktors nach der zweiten Zufuhrstelle eine maximale Temperatur von 290°C. Als Molekulargewichtsregler wurde dem Reaktionsgemisch Propylen zugesetzt. Die Reglermenge wurde so bemessen, daß sich ein Molekulargewicht entsprechend eines Schmelzindices von jeweils 0,4 g/10', gemessen nach DIN 53 735, einstellte. Auf diese Weise wurden jeweils 500 Gew.-Teile eines Ethylen-Acrylsäure-n-butylester-Copolymerisates erhalten, dessen Acrylsäuregehalt jeweils 1,6 Gew.% betrug.

Das Copolymerisat hatte eine Dichte von

Vergleichsbeispiel 1: 0,9215
Vergleichsbeispiel 2: 0,9233

$g/cm^3$, gemessen nach DIN 53 479.

Patentansprüche

1. Verfahren zur Herstellung von Copolymerisaten des Ethylens durch Copolymerisation von Ethylen mit anderen mit Ethylen copolymerisierbaren Comonomeren in einem Polymerisationssystem bei Drücken von 500 bis 5.000 bar und Temperaturen von 50 bis 450°C in Gegenwart von radikalisch zerfallenden Polymerisationsinitiatoren, indem man dem Polymerisationssystem ein Gemisch aus Ethylen, Regler, gegebenenfalls Initiator und gegebenenfalls Comonomer zuführt, dadurch gekennzeichnet, daß Comonomere getrennt vom Ethylengemisch direkt dem Polymerisationssystem zudosiert werden.

2. Verfahren nach Anspruch 1, dadurch gekennzeichnet, daß die gesamte Menge der Comonomeren getrennt vom Ethylengemisch zudosiert wird.

3. Verfahren nach Anspruch 1, dadurch gekennzeichnet, daß eine Teilmenge der Comonomeren getrennt vom Ethylengemisch zudosiert wird.

4. Verfahren nach Anspruch 1, dadurch gekennzeichnet, daß die vom Ethylengemisch getrennte Zudosierung von Comonomeren zumindest an einer Stelle des Polymerisationssystems erfolgt.

5. Verfahren nach Anspruch 1, dadurch gekennzeichnet, daß die vom Ethylengemisch getrennte Zudosierung der Comonomeren durch schnell laufende Hochdruckkolbenpumpen erfolgt.